# EUROPEAN PATENT APPLICATION

(11) **EP 1 113 665 A1**
(43) Date of publication of application: **04.07.2001**
(21) Application number: 00126421.7
(22) Date of filing: 05.12.2000
(51) Int. Cl.: H04N 3/15, H04N 5/225

(54) **Image pickup device**

(30) Priority: 28.12.1999 JP 37729399
(71) Applicant: VICTOR COMPANY OF JAPAN, LIMITED, Yokohama-Shi Kanagawa-Ken 221 (JP)
(72) Inventor: Otake, Yoshichi, Kamakura-shi, Kanagawa-ken (JP); Nidaira, Fumio, Chigasaki-shi, Kanagawa-ken (JP); Tengeiji, Hideki, Yokohama-shi, Kanagawa-ken (JP); Sakamoto, Shouji, Yokohama-shi, Kanagawa-ken (JP)
(74) Representative: HOFFMANN - EITLE

(57) **Abstract**

In an image pickup device, a crystal as an optical low pass filter is rotatable in a vertical plane that is vertical to an optical axis. In a normal mode and a shift mode, the crystal is rotated in order to change a separation direction of pixels. Thereby, moirés in a circular zone can be eliminated in the normal mode, and moires in a high frequency side can be eliminated in the shift mode while a contrast zero line is not passed through the center section of the circular zone in order to prevent the decreasing of a resolution and to improve the characteristic of the shift mode. Because the rotary mechanism can be formed simply and smaller, the device can be manufactured with a low coast and a high realibility.

## Description

### CROSS-REFERENCE TO RELATED APPLICATION

This application claims benefit of priority under 35 USC §119 to Japanese Patent Application No.11-377293, filed on December 28,1999, the entire contents of which are incorporated herein by reference herein.

### BACKGROUND OF THE INVENTION

### 1. Field of the Invention

The present invention relates to an image pickup device such as an electronic still camera and an electronic video camera having an electronic still function, and, more particularly, to an image pickup device capable of performing an image shift pickup in order to increase the resolution of solid state image sensor elements therein.

### 2. Description of the Related Art

Conventionally, the image shift pickup method is widely known in the field of electronic still-video cameras and the like. In this image shift pickup method, pixels (or picture elements) in a solid state image sensor are interpolated by relatively shifting the images of an object from image pickup planes thereof by a desired amount after shooting the object many times.

For instance, the image pickup device such as a solid state image sensing device shoots the object twice at the positions, namely, at an inclined position of a pixel pitch by half between the position of the original image formation and the solid state image sensor element, and at the position shifted by shifting it to a horizontal (row) direction, and the images obtained above are then interpolated by the image obtained by shifting the original image formation. This can achieve the double resolution in both the vertical and horizontal directions, or only the horizontal direction. As the image shift pickup method, the plane image parallel-shift pickup method has been proposed in which the image is shifted in the image pickup plane by a desired amount.

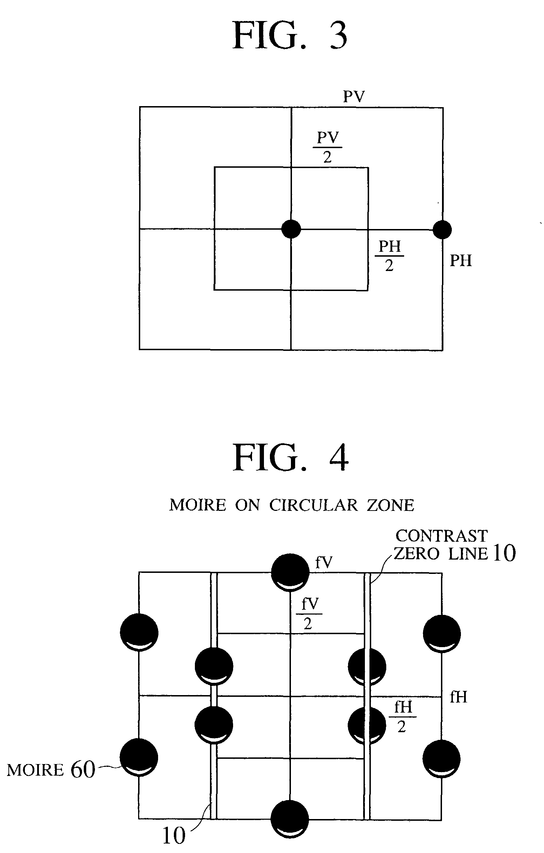

By the way, when the solid state image pickup device shoots a zone plate without any optical low pass filter, one or more moirés occur. These moirés occur in different patterns according to the kind of CCD (Charge Coupled Device), the type of signal processing, and the like, for example, FIG.4 shows one example of the moirés 60.

In general, the moirés occur in a horizontal direction every the half fH/2 of the frequency fH of a pixel, or every several times thereof. Thus, the frequency of fH/2 becomes the important value. In a vertical direction, the moirés occur every the half fV/2 of the frequency fV of a pixel, or every several times thereof. In this case, the frequency of fV/2 becomes the important value.

The moirés of the frequency fH/2 can be eliminated by using an optical low pass filter having a separation width that is equal to the horizontal pixel pitch PH, but, at the same time, this losses the resolution at this frequency. The moiré of the frequency fV/2 can be eliminated by using an optical low pass filter having a separation width that is equal to a vertical pixel pitch PV, but, the resolution of this frequency is also eliminated. The frequency when the resolution is eliminated is inversely proportional to the separation width. Thereby, it is necessary to keep the valance of moiré elimination effect, the deterioration of the resolution, a manufacture cost thereof, a size, and the like according to an achievement object of the image pickup sensor when any optical low pass filter is used.

Although the optical low pass filter is incorporated in the optical path of the image pickup sensor in order to eliminate any occurrence of moirés in the image of an object, there is the mechanism capable of removing this optical low pass filter from the optical path of the image pickup sensor in order to increase the resolution during the pixel shift shooting (for example, see Japanese Patent laid-open publication No.JP-A-10/322589).

However, it is necessary to incorporate an insertion/removable mechanism for the optical low pass filter in order to remove this optical low pass filter from the optical path of the image pickup sensor during the pixel shift shooting. This insertion/removable mechanism requires a dummy glass to compensate the optical length of the optical low pass filter in withdrawal, the space and the like for withdrawal of the optical low pass filter and the dummy glass. This causes to increase the lens block and also to increase the manufacture cost of the image pickup device. Furthermore, there is a drawback that this mechanism requires a large mechanical operation to insert/remove the optical low pass filter reduce the reliability of the device.

Moreover, to eliminate the moirés at the high frequency side during the image shift shooting requires an optical low pass filter at a high frequency side. This requirement causes to increase a back focus of the lens, so that the lens block is more increased. This also causes the drawback to increases the manufacture cost of the image pickup device.

In order to prevent any increasing of the size of the image pickup device and of the manufacture cost thereof, it is expected to develop the image pickup device having the function for optimum applying an optical low pass filter to both the normal shooting and the pixel shift shooting.

### SUMMARY OF THE INVENTION

Accordingly, an object of the present invention is, with due consideration to the drawbacks of the conventional technique, to provide an image pickup device capable of preventing any occurrence of moirés during the normal shooting without loss of the reliability, and also preventing any occurrence of moirés at a high frequency side during the pixel shift shooting without any decreasing of the resolution, and increasing both the size thereof and the manufacture cost.

In accordance with a preferred embodiment of the present invention, an image pickup device has a solid state image sensor for converting an optical image to electric signals that operates under an image shift mode and a normal mode, the image shift mode is a high resolution mode in which pixels in the solid state image sensor are interpolated in order to increase a resolution, and the normal operation mode is lower in resolution than the image shift mode. This image pickup device comprises one or a pair of optical low pass filter that being rotatably placed in a vertical plane that being vertical to an optical axis; and

a rotary mechanism for rotating the optical low pass filter in the vertical plane that is vertical to the optical axis. In the device, the rotary mechanism rotates the optical low pass filter in order to change an angle of the optical low pass filter in the normal mode and the image shift mode.

In accordance with another preferred embodiment of the present invention, an image pickup device has a solid state image sensor for converting an optical image to electric signals that operates under an image shift mode and a normal mode, the image shift mode is a high resolution mode in which pixels in the solid state image sensor are interpolated in order to increase a resolution, and the normal operation mode is lower in resolution than the image shift mode. This image pickup device comprises:
a first optical low pass filter that being fixed in a vertical
plane that being vertical to an optical axis; a second optical
low pass filter that being rotatably placed in the vertical plane
that being vertical to the optical axis; and a rotary mechanism for rotating the second optical low pass filter in the vertical plane that is vertical to the optical axis. In the device, the rotary mechanism rotates the second optical low pass
filter in order to change an angle of the second optical low pass filter in the normal mode and the image shift mode.

In the image pickup device described above, during the normal mode, a separation direction of a light from the first optical low pass filter is the same as that from the second optical low pass filter, and during the image shift mode, the separation direction of the light from the first optical low pass filter is a desired angle to the separation direction of a light from the second optical low pass filter in order to set these separation directions of the first and second optical low pass filters in two directions.

In accordance with another preferred embodiment of the present invention, an image pickup device has a solid state image sensor for converting an optical image to electric signals that operates under an image shift mode and a normal mode, the image shift mode is a high resolution mode in which pixels in the solid state image sensor are interpolated in order to increase a resolution, and the normal operation mode is lower in resolution than the image shift mode. This image pickup device comprises: first and second optical low pass filters that being fixed in a vertical plane that being vertical to an optical axis; a third optical low pass filter that being rotatably placed in the vertical plane that being vertical to the optical axis; and a rotary mechanism for rotating the third optical low pass filter in the vertical plane that is vertical to the optical axis. In this device, the rotary mechanism rotates the third optical low pass filter in order to change an angle of the third optical low pass filter in the normal mode and the image shift mode.

In the image pickup devices as another preferred embodiment, when the normal mode is switched to the image shift mode, a change mount of a rotation angle or a separation width of a light form the optical low pass filter, the second optical low pass filter, or the third optical low pass filter rotated by the rotary mechanism is optimally determined based on at lease one of or a combination of a characteristic of an image pickup optical mechanism, a characteristic of a color filter, a characteristic of a signal processing circuit system including a CCD.

According to the present invention, one or more optical lowpass filters are rotatable in avertical plane that is vertical to an optical axis, and in the normal mode and the shift mode, the optical low pass filter is rotated in order to change the separation direction of pixels. Thereby, the moirés that occur at the high frequency side can be eliminated in the shift mode while any contrast zero line is not passed through the center section of the circular zone.

### BRIEF DESCRIPTION OF THE DRAWINGS

These and other objects, features, aspects and advantages of the present invention will become more apparent from the following detailed description of the present invention when taken in conjunction with the accompanying drawings, in which:
FIG.1 is a schematic diagram showing a configuration of an optical path (lens block) of the image pickup device according to the first embodiment of the present invention;
FIG.2 is a diagram showing a separation width of the crystal shown in FIG.1 and a direction thereof during a normal mode;
FIG.3 is a diagram showing a separation pattern of a ray in the crystal shown in FIG.1 during the normal mode;
FIG.4 is a diagram showing a relationship between moires in a circular zone and contrast zero lines of the crystal shown in FIG.1 during the normal mode;
FIG.5 is a diagram showing a change of a rotation position of the crystal shown in FIG.1 when the normal mode is switched to a shift mode;
FIG.6 is a diagram showing a change of the crystal shown in FIG.1 in a separation direction during the shift mode;
FIG.7 is a diagram showing a separation pattern of the ray in the crystal shown in FIG.1 in the shift mode;
FIG.8 is a diagram showing a relationship between moirés in a circular zone and contrast zero lines of the crystal shown in FIG.1 during the shift mode;
FIG.9 is a schematic diagram showing a configuration of an optical path (lens block) of the image pickup device according to the second embodiment of the present invention;
FIG.10 is a diagram showing a separation width of the crystal shown in FIG. 9 and a direction thereof during the normal mode;
FIG.11 is a diagram showing a separation pattern of a pixel in the crystal shown in FIG.9 during the normal mode;
FIG.12 is a diagram showing a relationship between moirés in a circular zone and contrast zero lines of the crystal shown in FIG.9 during the normal mode;
FIG.13 is a diagram showing a change of a rotation position of the crystal shown in FIG.9 when the normal mode is switched to the shift mode;
FIG.14 is a diagram showing a change of the direction of a separation width of the crystal shown in FIG.9 during the shift mode;
FIG.15 is a diagram showing a separation pattern of a pixel in the crystal shown in FIG.9 in the shift mode;
FIG.16 is a diagram showing a relationship between moirés in a circular zone and contrast zero lines of the crystal shown in FIG.9 during the shift mode;
FIG.17 is a schematic diagram showing a configuration of an optical path (lens block) of the image pickup device according to the third embodiment of the present invention;
FIG.18 is a diagram showing a separation width of the crystal shown in FIG. 17 and a direction thereof during the normal mode;
FIG.19 is a diagram showing a separation pattern of a pixel in the crystal shown in FIG.17 during the normal mode;
FIG.20 is a diagram showing a relationship between moirés in a circular zone and contrast zero lines of the crystal shown in FIG.17 during the normal mode;
FIG.21 is a diagram showing a change of a rotation position of the crystal shown in FIG.17 when the normal mode is switched to the shift mode;
FIG.22 is a diagram showing a change of the direction of a separation width of the crystal shown in FIG.17 during the shift mode;
FIG. 23 is a diagram showing a separation pattern of a pixel in the crystal shown in FIG.17 in the shift mode;
FIG.24 is a diagram showing a relationship between moirés in a circular zone and contrast zero lines of the crystal shown in FIG.17 during the shift mode;
FIG.25 is a schematic diagram showing a configuration of an optical path (lens block) of the image pickup device according to the fourth embodiment of the present invention;
FIG.26 is a diagram showing a separation width of the crystal shown in FIG. 25 and a direction thereof during the normal mode;
FIG. 27 is a diagram showing a separation pattern of a pixel in the crystal shown in FIG.25 during the normal mode;
FIG. 28 is a diagram showing a relationship between moirés in a circular zone and contrast zero lines of the crystal shown in FIG.25 during the normal mode;
FIG.29 is a diagram showing a change of a rotation position of the crystal shown in FIG.25 when the normal mode is switched to the shift mode;
FIG.30 is a diagram showing a change of the direction of a separation width of the crystal shown in FIG.25 during the shift mode;
FIG. 31 is a diagram showing a separation pattern of a pixel in the crystal shown in FIG.25 in the shift mode;
FIG.32 is a diagram showing a relationship between moirés in a circular zone and contrast zero lines of the crystal shown in FIG.25 during the shift mode;
FIG.33 is a schematic diagram showing a configuration of an optical path (lens block) of the image pickup device according to the fifth embodiment of the present invention;
FIG.34 is a diagram showing a separation width of the crystal shown in FIG. 33 and a direction thereof during the normal mode;
FIG. 35 is a diagram showing a separation pattern of a pixel in the crystal shown in FIG.33 during the normal mode;
FIG.36 is a diagram showing a relationship between moires in a circular zone and contrast zero lines of the crystal shown in FIG.33 during the normal mode;
FIG. 37 is a diagram showing a change of a rotation position of the crystal shown in FIG.33 when the normal mode is switched to the shift mode;
FIG.38 is a diagram showing a change of the direction of a separation width of the crystal shown in FIG.33 during the shift mode;
FIG. 39 is a diagram showing a separation pattern of a pixel in the crystal shown in FIG.33 in the shift mode;
FIG.40 is a diagram showing a relationship between moirés in a circular zone and contrast zero lines of the crystal shown in FIG.33 during the shift mode;
FIG.41 is a schematic diagram showing a configuration of an optical path (lens block) of the image pickup device according to the sixth embodiment of the present invention;
FIG.42 is a diagram showing a separation width of the crystal shown in FIG. 41 and a direction thereof during the normal mode;
FIG. 43 is a diagram showing a separation pattern of a pixel in the crystal shown in FIG.41 during the normal mode;
FIG.44 is a diagram showing a relationship between moirés in a circular zone and contrast zero lines of the crystal shown in FIG.41 during the normal mode;
FIG.45 is a diagram showing a change of a rotation position of the crystal shown in FIG.41 when the normal mode is switched to the shift mode;
FIG.46 is a diagram showing a change of the direction of a separation width of the crystal shown in FIG.41 during the shift mode;
FIG.47 is a diagram showing a separation pattern of a pixel in the crystal shown in FIG.41 in the shift mode; and
FIG.48 is a diagram showing a relationship between moirés in a circular zone and contrast zero lines of the crystal shown in FIG.41 during the normal mode.

### DESCRIPTION OF THE PREFERRED EMBODIMENTS

Other features of this invention will become apparent through the following description of preferred embodiments which are given for illustration of the invention and are not intended to be limiting thereof.

### First embodiment

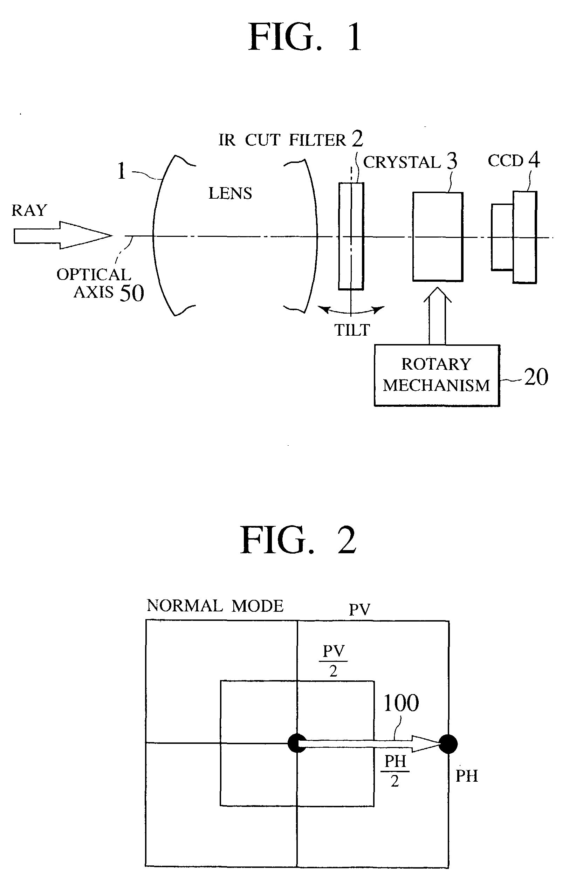

FIG.1 is a schematic diagram showing a configuration of the optical path (lens block) of the image pickup device according to the first embodiment of the present invention.

The image pickup optical path in the image pickup device comprises a lens 1 for shooting an object (not shown), a IR (InfRared) cut filter 2 for cutting an ultraviolet component in an incident ray, a crystal 3 so placed that it can be rotatable as an optical low pas filter, a CCD (a Charge Coupled Device) 4 for converting an optical image to electrical signals, and a rotary mechanism 20 for rotating the crystal 3 in a vertical plane which is vertical to the optical axis 50.

It is also possible that the crystal 3 as the optical low pass filter can be rotated by manual or electrical power, and it is possible to use a double refraction plate, a diffraction grating, a double prism, and the like instead of the crystal 3.

Next, a description will be given of the operation of the image pickup device of the first embodiment.

The lens 1 makes an optical image of an object (not shown) on the CCD 4 through the IR cut filter 2 and the crystal 3.

Here, when "PH" is a horizontal (row) pixel pitch and "PV" is a vertical (column) pixel pitch, the separation width of the object image obtained by the crystal 3 corresponds to the horizontal pixel pitch.

In a normal mode, the separation width of the crystal 3 becomes the width of the horizontal pixel pitch in a horizontal direction, as shown by the arrow 100 in FIG.2. Accordingly, the separation pattern in the normal mode becomes the separation pattern only in one direction shown in FIG.3, so that it is possible to eliminate the moirés on the contrast zero lines 10 in the moires 60 that appear in the pattern shown in FIG.4 when the zone plate is transferred.

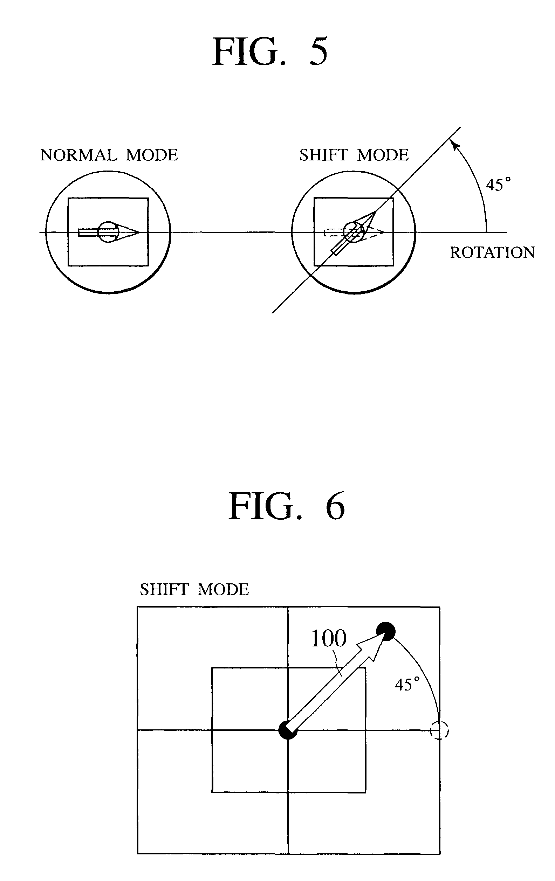

Next, during the shift shooting mode (or the shift mode), the crystal 3 is rotated by 45° in a vertical plane of the optical axis 50 by the rotary mechanism 20 in order to shoot the object. In this shift mode, because the rotation angle of the crystal 3 is changed, the separation direction of the crystal 3 is changed as shown in FIG.5.

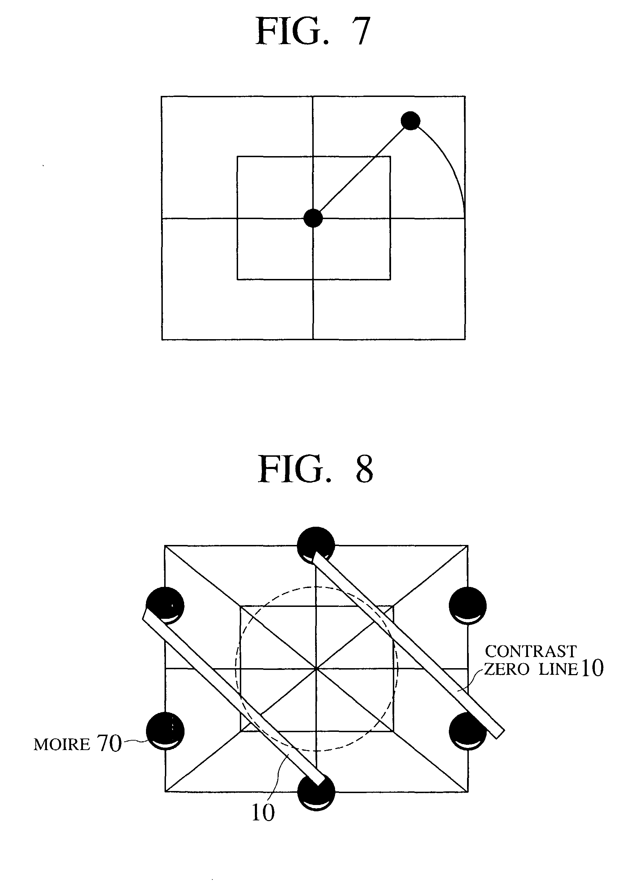

Accordingly, the separation direction of the crystal 3 becomes the direction of 45° as shown by the arrow 100 in FIG.6, and the separation pattern in the shift mode becomes the pattern shown in FIG.7. It is thereby possible to eliminate the moirés in the high frequency side on the contrast zero lines 10 in the moirés 70 that appear in the pattern shown in FIG.8 during the shift mode.

According to the first embodiment, it is possible that the contrast zero lines 10 are positioned in the center section of the circular zone during the normal mode, as shown in FIG.4, and it is also possible that the contrast zero lines 10 are positioned so that these lines 10 are in a slanting direction and also shifted toward the out section of the center of the circular zone by rotating the crystal 3 by 45° . It is thereby possible to improve the degradation of the resolution at the center of a screen, and also to eliminate the moirés at the high frequency side. Furthermore, because the crystal 3 is only rotated in the vertical plane of the optical axis 50 , it is possible to make the rotary mechanism 20 with a small size. It is therefore possible to prevent the degradation of the resolution caused by the presence of the crystal 3 in the image pickup optical path during the shift mode without increasing of the lens block and manufacture cost thereof. Further, it is possible to obtain the reliability adequately in actual use and to provide the practical image pickup device having an image shift function with a low cost because the rotary mechanism 20 only rotates the crystal 3 in the vertical plane of the optical axis 50 by a desired angle.

### Second embodiment

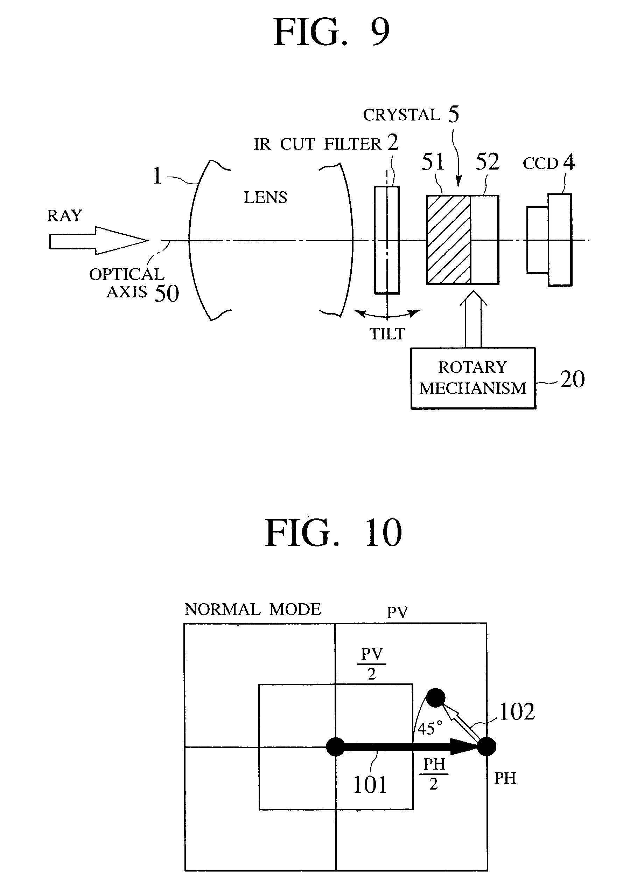

FIG.9 is a schematic diagram showing a configuration of the optical path (lens block) of the image pickup device according to the second embodiment of the present invention. The same reference numbers will be used for the same components of the first embodiment.

The image pickup optical path in the image pickup device comprises the lens 1 for shooting an object (not shown), the IR cut filter 2 for cutting an ultraviolet component in an incident ray, a crystal 5 consisting of two crystals as an optical low pas filter, the CCD 4 for converting an optical image to electrical signals, and the rotary mechanism 20 for rotating the crystal 5 in a vertical plane which is vertical to the optical axis 50. The crystal 5 consists of a thick crystal 51 and a thin crystal 52 formed in one body. It is also acceptable to rotate the crystal 5 by manual or electrical power.

Next, a description will be given of the operation of the image pickup device of the second embodiment.

The lens 1 makes an optical image of an object (not shown) on the CCD 4 through the IR cut filter 2 and the crystal 5.

Here, when "PH" is a horizontal pixel pitch and "PV" is a vertical pixel pitch, the separation width of the object image obtained by the thick crystal 51 forming the crystal 5 corresponds to the horizontal pixel pitch. In addition, the separation width of the object image obtained by the thin crystal 52 forming the crystal 5 is shorter than the horizontal pixel pitch.

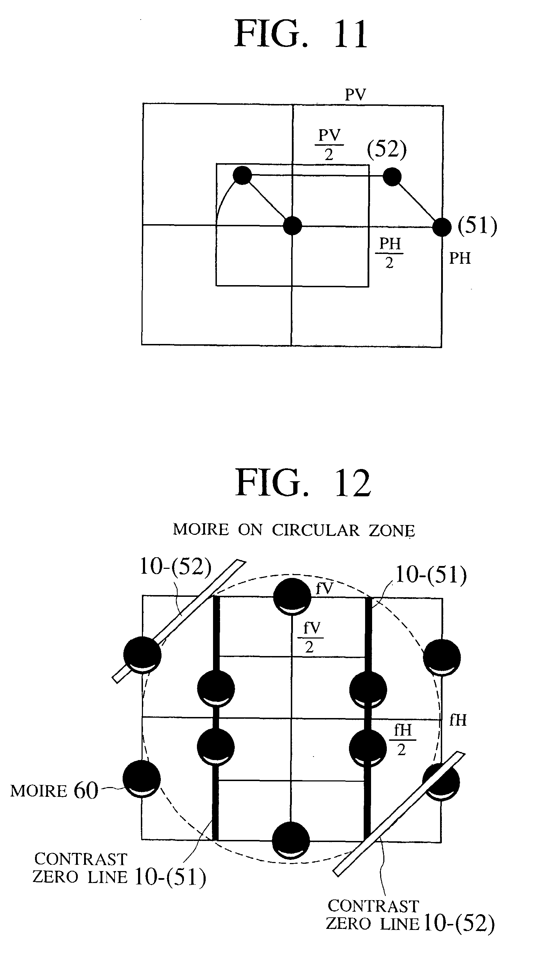

In the normal mode, the separation width of the crystal 5 becomes the width of the horizontal pixel pitch in a horizontal direction, as shown by the arrow 101 in FIG.10. The separation direction of the crystal 52 is elongated from the tip of the arrow 101 toward the inner section at the angle of 45°, as shown in FIG.10. Accordingly, the separation pattern in the normal mode becomes the separation pattern in two directions shown in FIG.11, so that it is possible to eliminate the moirés on the contrast zero lines 10-(51) and 10-(52) in the moires 60 that appear in the pattern shown in FIG.12.

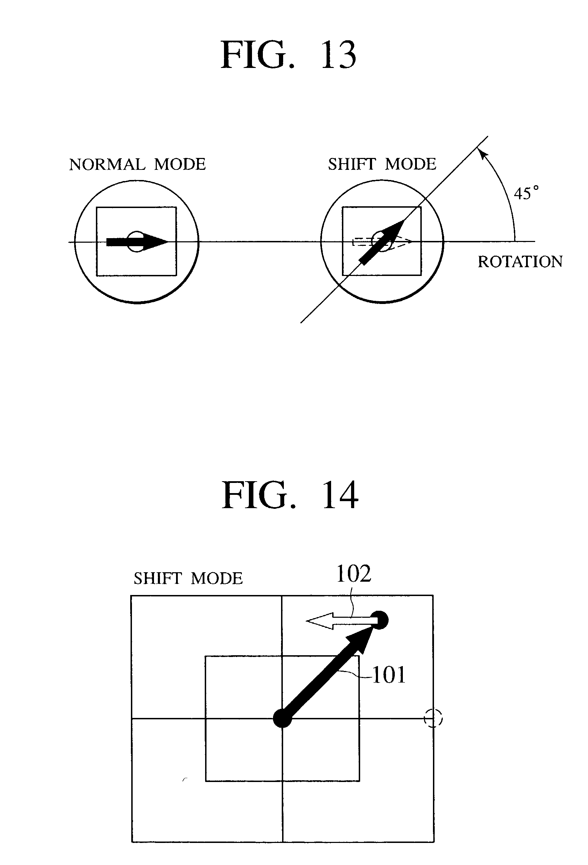

Next, during the shift shooting mode (or the shift mode), the crystal 5 is rotated by 45° in a vertical plane of the optical axis 50 by the rotary mechanism 20 in order to shoot the object. In this shift mode, because the rotation angle of the crystal 5 is changed, the separation direction of the crystal 5 is changed as shown in FIG.13.

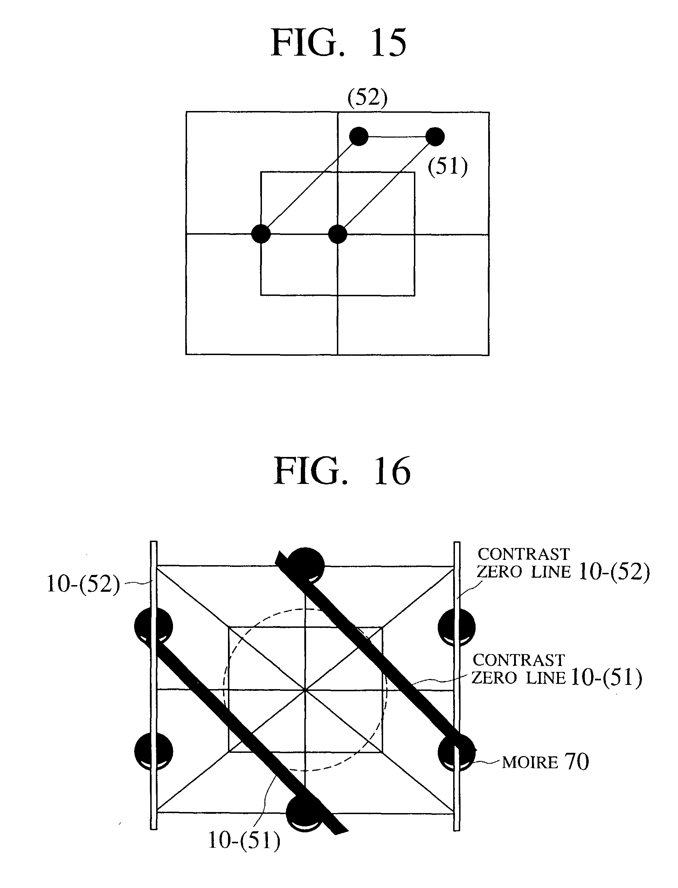

Accordingly, the separation direction of the crystal 5 becomes the direction of 45 as shown by the arrows 101 and 102 in FIG.14, and the separation pattern of pixels in the shift mode becomes the pattern shown in FIG. 15. It is thereby possible to eliminate the moirés in the high frequency side on the contrast zero lines 10-(51) and 10-(52) in the moirés 70 that appear in the pattern shown in FIG.16 during the shift mode.

According to the second embodiment, it is possible to have the same effect of the first embodiment shown in FIG.1 because the crystal 5 consists of the two crystals 51 and 52 and so formed that it can be rotated in the vertical plane to the optical path 50 and the crystal 5 is rotated by the rotary mechanism 20 by 45°. In particularly, as clearly shown in FIG.12, it is possible to eliminate more moirés when compared with the case (see FIG.4) of the first embodiment.

### Third embodiment

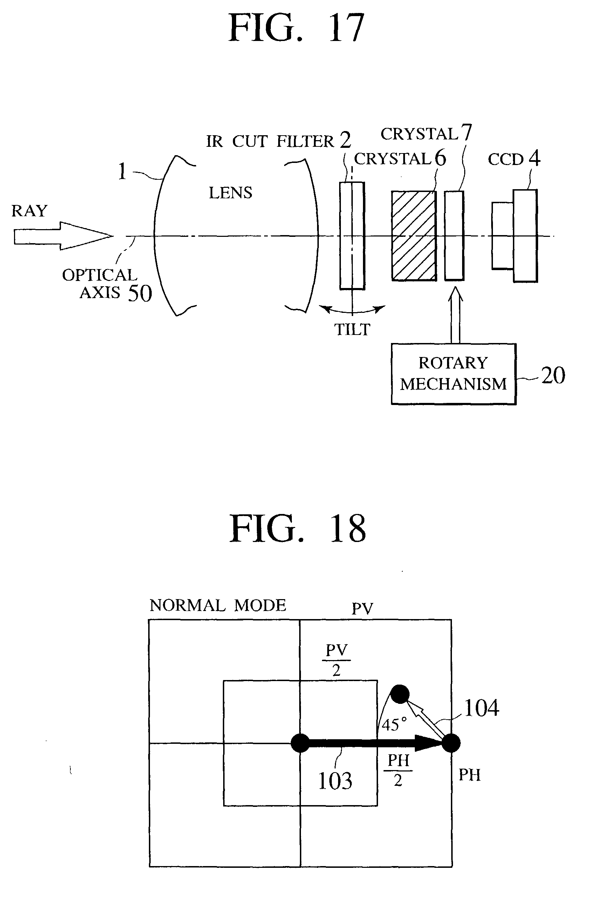

FIG.17 is a schematic diagram showing a configuration of the optical path (lens block) of the image pickup device according to the third embodiment of the present invention. The same reference numbers will be used for the same components of the first embodiment.

The image pickup optical path in the image pickup device comprises the lens 1 for shooting an object (not shown), the IR cut filter 2 for cutting an ultraviolet component in an incident ray, a crystal 6 that is fixed in position, a crystal 7 that is rotatabley positioned, the CCD 4 for converting an optical image to electrical signals, and the rotary mechanism 20 for rotating the crystal 7 in a vertical plane which is vertical to the optical axis 50.

The crystal 6 is a thick and the crystal 7 is a thin. It is also acceptable to rotate the crystal 7 by manual or electrical power.

Next, a description will be given of the operation of the image pickup device of the third embodiment.

The lens 1 makes an optical image of an object (not shown) on the CCD 4 through the IR cut filter 2 and the crystals 6 and 7.

Here, when "PH" is a horizontal pixel pitch and "PV" is a vertical pixel pitch, the separation width of the object image obtained by the crystal 6 corresponds to the horizontal pixel pitch. In addition, the separation width of the object image obtained by the crystal 7 is ahalf of the separationwiath obtained by the crystal 7.

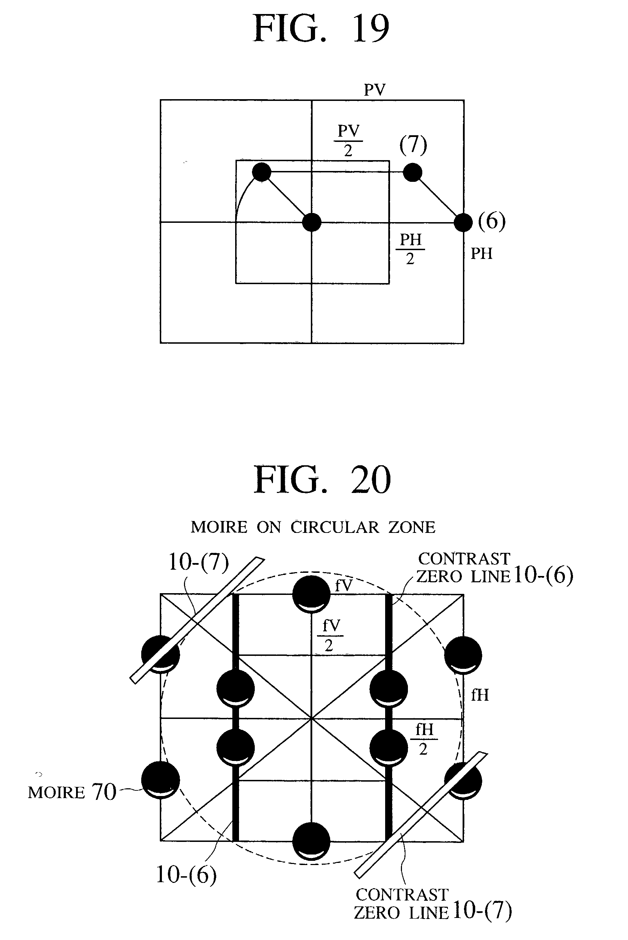

In the normal mode, the separation width of the crystal 6 becomes the width of the horizontal pixel pitch in a horizontal direction, as shown by the arrow 103 in FIG.18. The separation direction of the crystal 7 is elongated from the tip of the arrow 103 toward the inner section at the angle of 45°, as shown in FIG.10. Accordingly, the separation pattern in the normal mode becomes the separation pattern in both two directions by the crystals 6 and 7, as shown in FIG.20, so that it is possible to eliminate the moirés in the high frequency side on the contrast zero lines 10-(6) and 10-(7) in the moirés 70 that appear in the pattern shown in FIG.20.

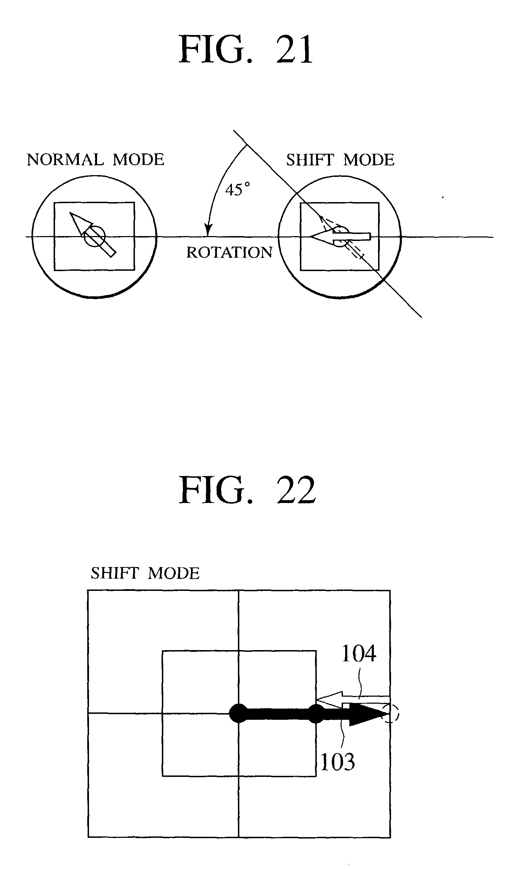

Next, during the shift shooting mode (or the shift mode), the crystal 7 is rotated by 45° in a vertical plane of the optical axis 50 by the rotary mechanism 20 in order to shoot the object. In this shift mode, because the rotation angle of the crystal 7 is changed, the separation direction of the crystal 7 is changed as shown in FIG.21.

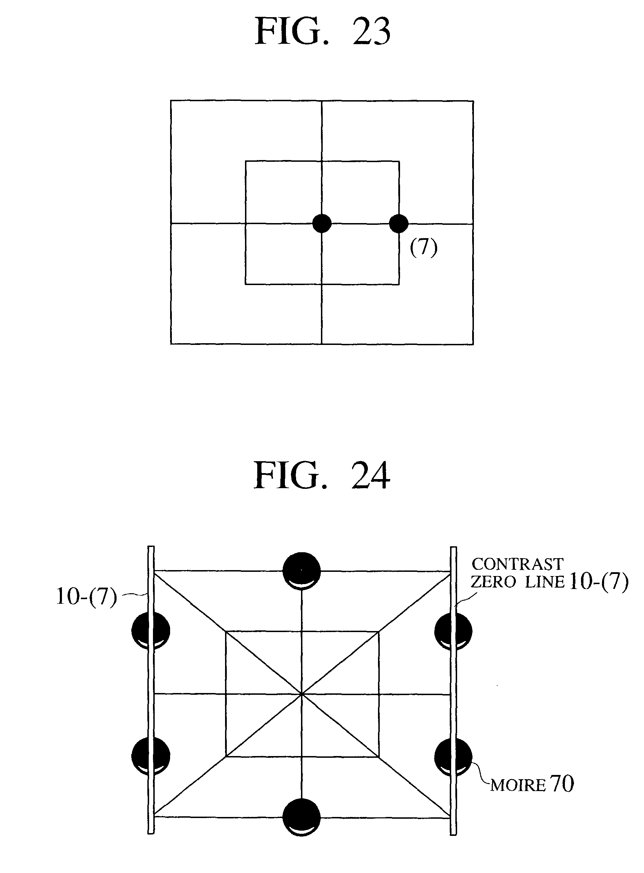

Accordingly, the separation direction of the crystal 7 becomes the opposite direction because it is rotated by 45°, as shown by the arrow 104 in FIG.22. Thereby, the separation pattern of pixels in the shift mode becomes the pattern that is separated toward only one direction, as shown in FIG.23, and it is thereby possible to eliminate the moires in the high frequency side on the contrast zero line 10-(7) in the moirés 70 that appear in the pattern shown in FIG.24 during the shift mode.

According to the third embodiment, it is possible to have the same effect of the first embodiment shown in FIG.1 because the thick crystal 6 is separated in configuration from the thin crystal 7 that form the optical low pass filter, and the crystal 7 is so formed that it can be rotated in the vertical plane to the optical path 50 and the crystal 7 is rotated by the rotary mechanism 20 by 45° in the shift mode. In particularly, as clearly shown in FIG.20, it is possible to eliminate more moirés when compared with the case (see FIG.4) of the first embodiment. In addition to this effect, the third embodiment can eliminate more moirés at the high frequency side in the circular zone in the shift mode, as shown in FIG.24, and because it is so formed that the contrast zero line 10-(7) is passed through the border of the circular zone and not through the center section of the circular zone, it is possible to prevent the limit of the resolution, like the case that the crystals 6 and 7 are removed from the image pickup optical path 50 during the shift mode.

### Fourth embodiment

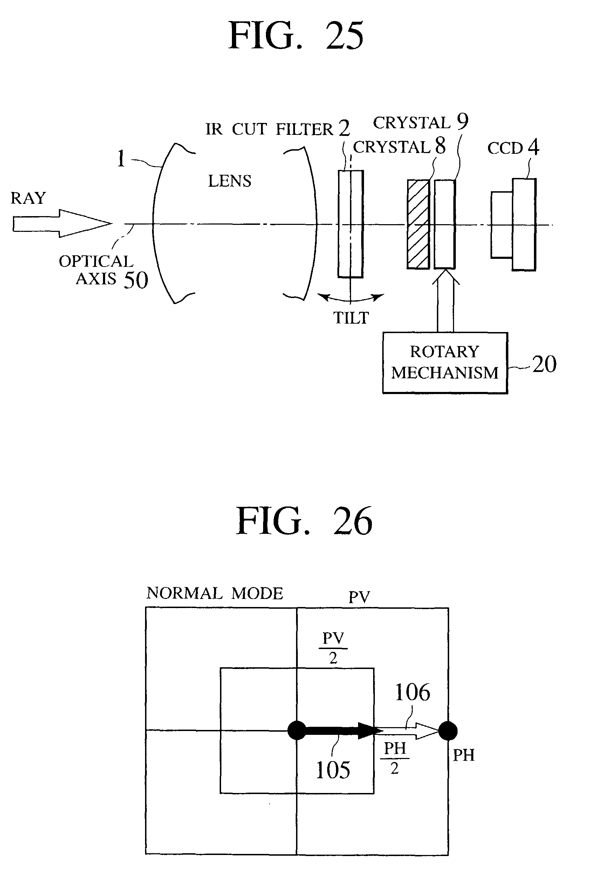

FIG.25 is a schematic diagram showing a configuration of the optical path (lens block) of the image pickup device according to the fourth embodiment of the present invention. The same reference numbers will be used for the same components of the first embodiment.

The image pickup optical path in the image pickup device comprises the lens 1 for shooting an object (not shown), the IR cut filter 2 for cutting an ultraviolet component in an incident ray, a crystal 8 that is fixed in position, a crystal 9 that is rotatably positioned, the CCD 4 for converting an optical image to electrical signals, and the rotary mechanism 20 for rotating the crystal 9 in a vertical plane which is vertically to the optical axis 50. Both the crystals 8 and 9 have a same thickness. It is also acceptable to rotate the crystal 9 by manual or electrical power.

Next, a description will be given of the operation of the image pickup device of the fourth embodiment.

The lens 1 makes an optical image of an object (not shown) on the CCD 4 through the IR cut filter 2 and the crystals 8 and 9.

Here, when "PH" is a horizontal pixel pitch and "PV" is a vertical pixel pitch, the thickness of each of the crystals 8 and 9 in the fourth embodiment is the same and also a half of the horizontal pixel pitch.

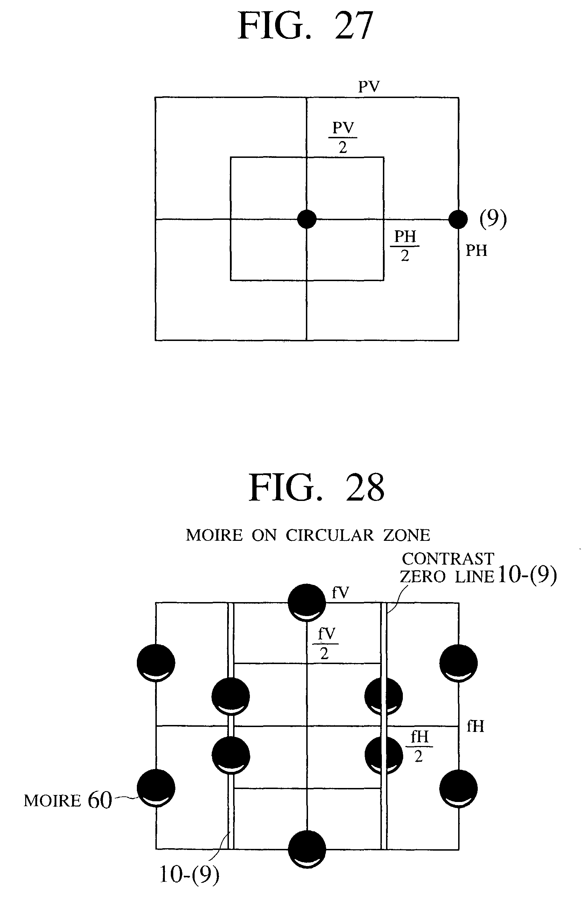

In the normal mode, the separation width of the crystal 8 becomes a half of the horizontal pixel pitch in a horizontal direction, as shown by the arrow 105 in FIG.26. The separation width of the crystal 9 is elongated from the tip of the arrow 105 by a half of the horizontal pixel pitch in the same direction, as shown by the arrow 106 in FIG.26. Accordingly, the separation pattern in the normal mode becomes the separation pattern in one direction, as shown in FIG.27, so that it is possible to eliminate the moires on the contrast zero line 10-(9) in the moires 70 that appear in the pattern shown in FIG.28.

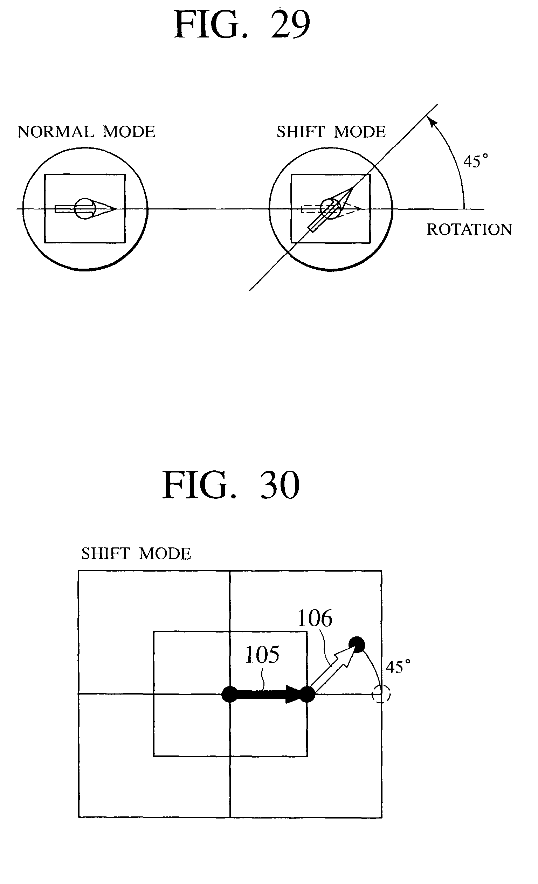

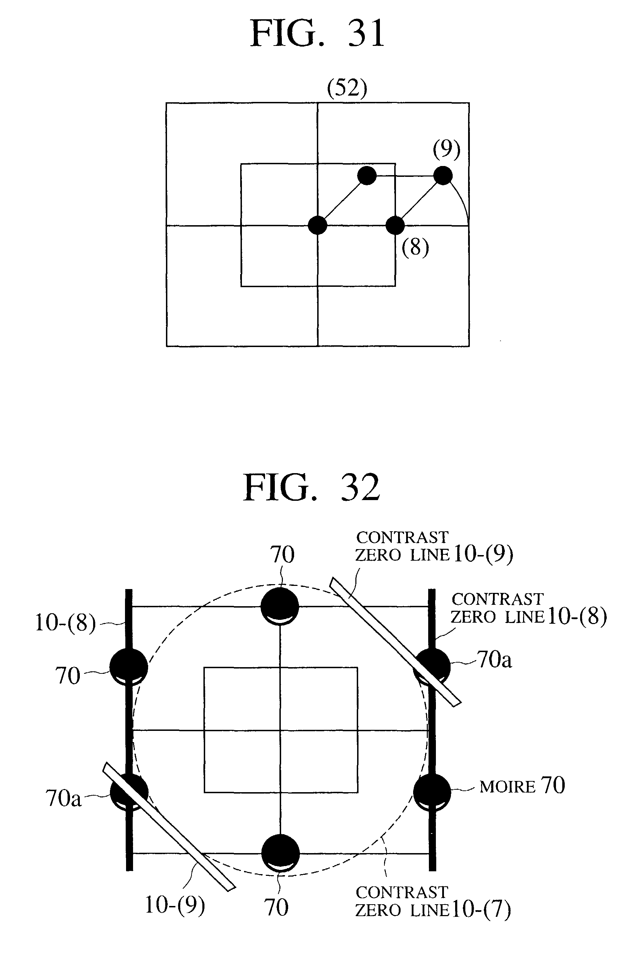

Next, during the shift shooting mode (or the shift mode), the crystal 9 is rotated by 45° in a vertical plane of the optical axis 50 by the rotary mechanism 20 in order to shoot the object. In this shift mode, the separation direction of the crystal 9 is changed, as shown in FIG.29. The separation direction of the crystal 9 is thereby rotated by 45°, as shown by the arrow 106 in FIG.30. The separation pattern of pixels in the shift mode becomes the separation pattern in two directions obtained by the crystals 8 and 9, as shown in FIG.31. Accordingly, it is thereby possible to eliminate the moirés in the high frequency side on the contrast zero lines 10-(8) and 10-(9) in the moires 70 that appear in the pattern shown in FIG.32 during the shift mode.

According to the fourth embodiment, it is possible to have the same effect of the first embodiment shown in FIG.1 because the crystal 8 is separated in configuration from the crystal 9, the crystals 8 and 9 forms the optical low pass filter, and the crystal 8 is fixed in position and the crystal 9 is so formed that it can be rotated in the vertical plane to the optical path 50, and the crystal 9 is also rotated by the rotary mechanism 20 by 45° in the shift mode. In particularly, the thickness of both the crystals 8 and 9 is thin and same, and the separation directions of the crystals 8 and 9 are same, as shown in FIG.26, it is possible to eliminate forcedly the moirés 70a in the moirés 70 during the shift mode when compared with the case (see FIG.24) of the third embodiment. In addition to this effect, because the contrast zero line 10-(9) is passed through the inner side of the outer boarder of the circular zone, but not through the center section of the circular zone, there is no limit to prevent the increasing of the resolution, just as in the case that the crystals 8 and 9 are removed from the image pickup optical path 50 during the shift mode. Furthermore, because the fixed crystal 8 is formed as thin as possible, it is possible to make the image pickup device with a small size and as light as possible.

### Fifth embodiment

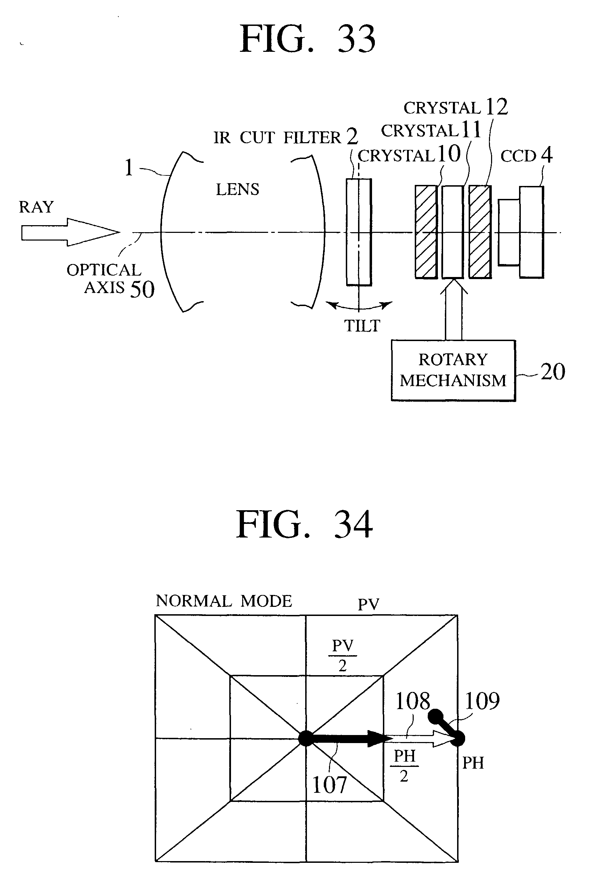

FIG.33 is a schematic diagram showing a configuration of the optical path (lens block) of the image pickup device according to the fifth embodiment of the present invention. The same reference numbers will be used for the same components of the first embodiment.

The image pickup optical path in the image pickup device comprises the lens 1 for shooting an object (not shown), the IR cut filter 2 for cutting an ultraviolet component in an incident ray, a crystal 10 that is fixed in position, a crystal 11 that is rotatably positioned, a crystal 12 is fixed in position (these crystals 10,11, and 12 form an optical low pass filter), the CCD 4 for converting an optical image to electrical signals, and the rotary mechanism 20 for rotating the crystal 11 in a vertical plane which is vertically to the optical axis 50. Both the crystals 10 and 11 have a same thickness. The thickness of the crystal 12 is thin, and it is also acceptable to rotate the crystal 11 by manual or electrical power.

Next, a description will be given of the operation of the image pickup device of the fifth embodiment.

The lens 1 makes an optical image of an object (not shown) on the CCD 4 through the IR cut filter 2 and the crystals 10, 11, and 12.

Here, when "PH" is a horizontal pixel pitch and "PV" is a vertical pixel pitch, the separation width of the crystals 10 and 11 becomes a half of the horizontal pixel pitch, and the thickness of the crystal 12 is thinner than that of each of the crystals 10 and 11 in the fifth embodiment.

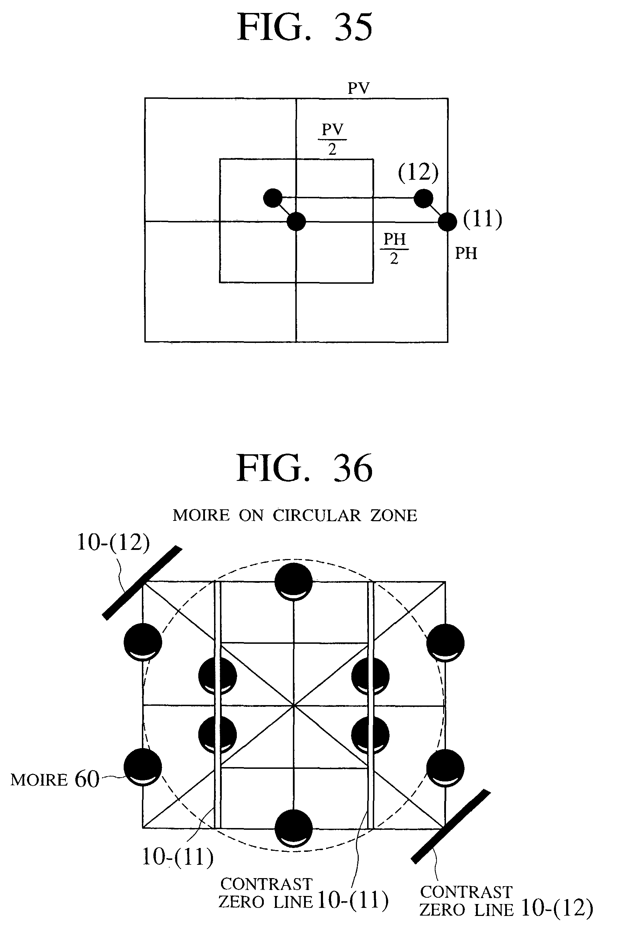

In the normal mode, the separation width of the crystal 10 becomes a half of the horizontal pixel pitch in a horizontal direction, as shown by the arrow 107 in FIG.34. The separation width of the crystal 11 is elongated from the tip of the arrow 107 to the horizontal direction by a half of the horizontal pixel pitch, as shown by the arrow 108 in FIG.34. In addition, the separation width of the crystal 12 is elongated from the tip of the arrow 108 toward the inner direction by 45°. Accordingly, the separation pattern in the normal mode becomes the separation pattern in two directions, as shown in FIG.35, so that it is possible to eliminate the moirés on the contrast zero lines 10-(11) and 10-(12) in the moirés 60 that appear in the pattern shown in FIG.36.

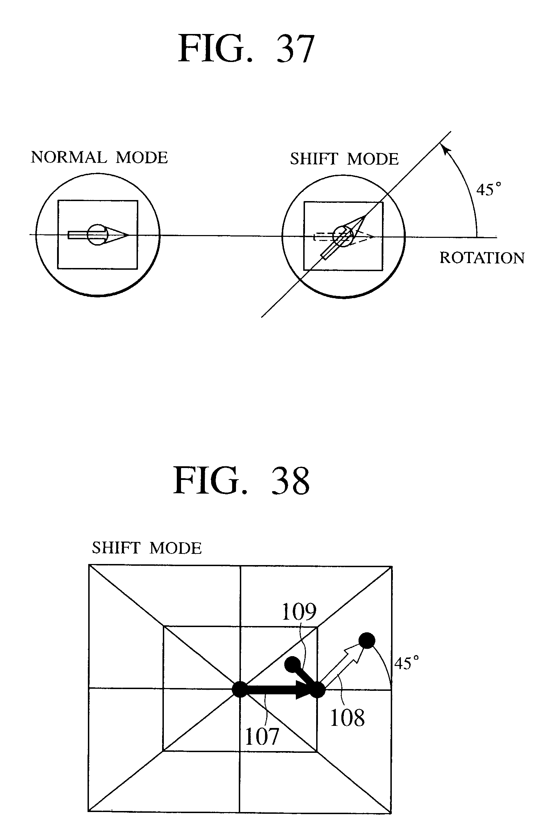

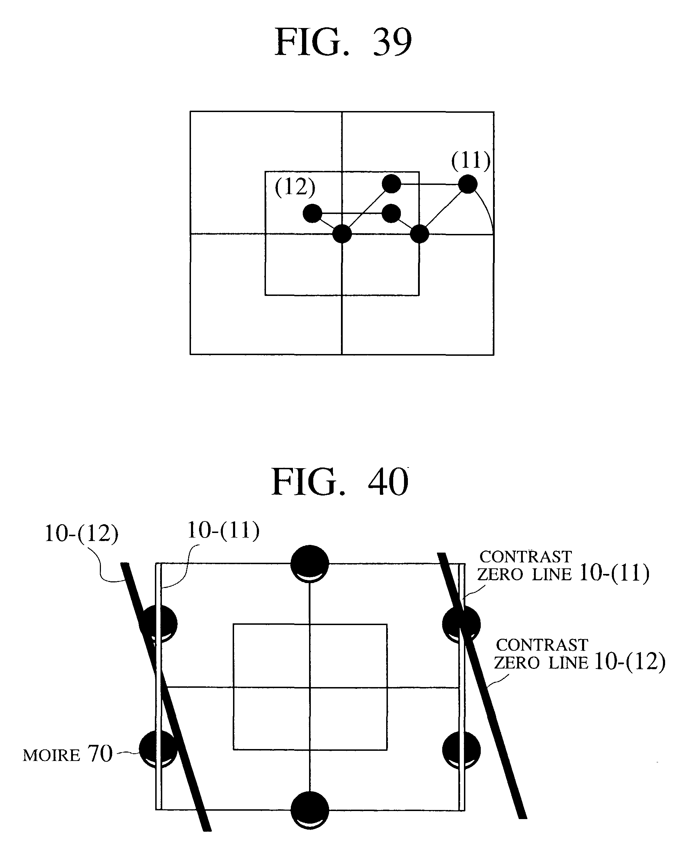

Next, during the shift shooting mode (or the shift mode), the crystal 11 is rotated by 45° in a vertical plane of the optical axis 50 by the rotary mechanism 20 in order to shoot the object. In this shift mode, the separation direction of the crystal 11 is changed, as shown in FIG.37. Accordingly, the separation direction of the crystal 11 is thereby rotated by 45°, as shown by the arrow 108 in FIG.38. The separation pattern of pixels in the shift mode becomes the separation pattern, as shown in FIG.39. Accordingly, it is thereby possible to eliminate the moirés in the high frequency side on the contrast zero lines 10-(11) and 10-(12) in the moirés 70 that appear in the pattern shown in FIG.40 during the shift mode.

According to the fifth embodiment, it is possible to have the same effect of the first embodiment shown in FIG.1 because the crystals 10, 11, and 12 are separated to each other in configuration and the crystals 10 and 12 are fixed, and the crystal 11 is rotatable, and it is rotated by the rotary mechanism 20 by 45° in the shift mode. In particularly, as shown in FIG.40, it is possible to eliminate more moirés 70 during the shift mode like the case of the fourth embodiment shown in FIG.32. In addition, because it is so formed that the contrast zero line 10-(11) is passed through the boarder of the circular zone, and the contrast zero line 10-(12) is passed slightly through the inner side of the outer boarder in the circular zone, but any contrast zero line is not passed through the inner section of the circular zone, there is no limit to prevent the increasing of the resolution, just as in the case that the crystals 10, 11, and 12 are removed from the image pickup optical path 50 during the shift mode.

### Sixth embodiment

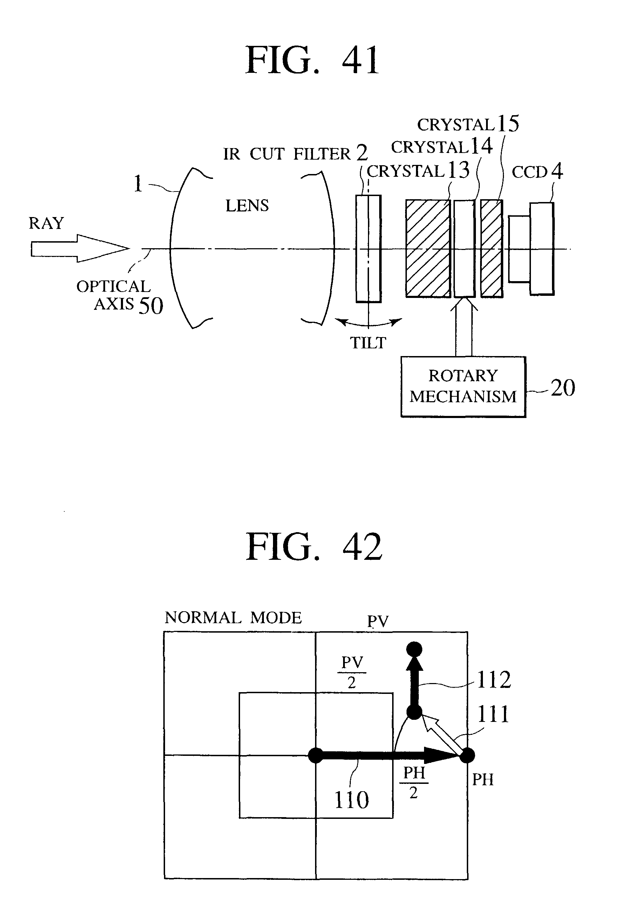

FIG.41 is a schematic diagram showing a configuration of the optical path (lens block) of the image pickup device according to the sixth embodiment of the present invention. The same reference numbers will be used for the same components of the first embodiment.

The image pickup optical path in the image pickup device comprises the lens 1 for shooting an object (not shown), the IR cut filter 2 for cutting an ultraviolet component in an incident ray, a crystal 13 that is fixed in position, a crystal 14 that is rotatably positioned, a crystal 15 is fixed in position (these crystals 13, 14, and 15 form an optical low pass filter), the CCD 4 for converting an optical image to electrical signals, and the rotary mechanism 20 for rotating the crystal 14 in a vertical plane which is vertically to the optical axis 50. Both the crystals 14 and 15 have a same thickness. The thickness of the crystal 13 is thicker than that of each of the crystals 14 and 15, and it is also acceptable to rotate the crystal 14 by manual or electrical power.

Next, a description will be given of the operation of the image pickup device of the sixth embodiment.

The lens 1 makes an optical image of an object (not shown) on the CCD 4 through the IR cut filter 2 and the crystals 13, 14, and 15.

Here, when "PH" is a horizontal pixel pitch and "PV" is a vertical pixel pitch, the separation width of the crystal 13 becomes the horizontal pixel pitch, and the separation width of the crystals 14 and 15 becomes a half of the horizontal pixel pitch in the sixth embodiment.

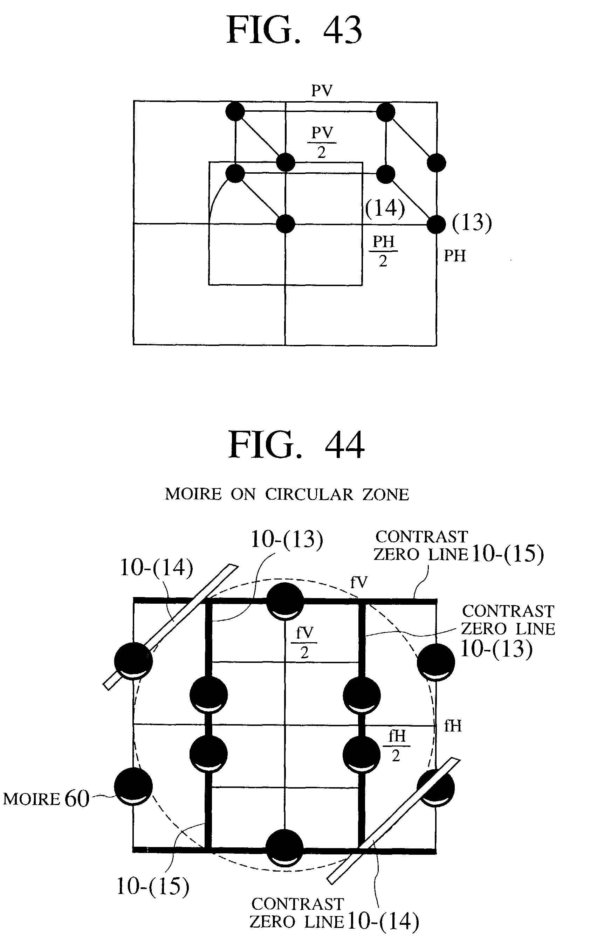

In the normal mode, the separation width of the crystal 13 becomes the horizontal pixel pitch in the horizontal direction, as shown by the arrow 110 in FIG.42, the separation width of the crystal 14 is elongated from the tip of the arrow 110 toward the direction of 45 ° by a half of the horizontal pixel pitch, as shown by the arrow 111 in FIG.42. In addition, the separation direction of the crystal 15 is elongated from the tip of the arrow 111 toward the vertical direction, as shown in the arrow 112 in FIG. 42. Accordingly, the separation pattern in the normal mode becomes the separation pattern in three directions by the crystals 13, 14, and 15, as shown in FIG.43, so that it is possible to eliminate the moirés on the contrast zero lines 10-(13), 10-(14), and 10-(15) in the moires 60 that appear in the pattern shown in FIG.44.

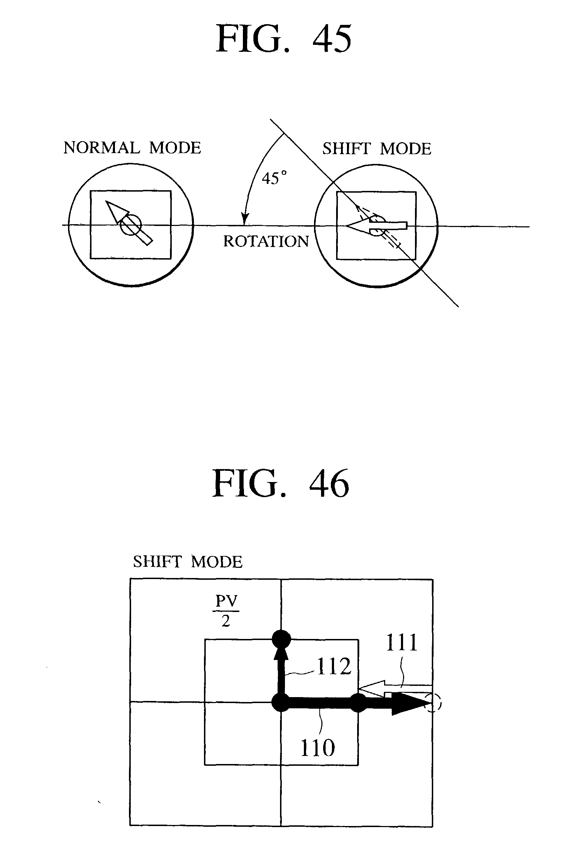

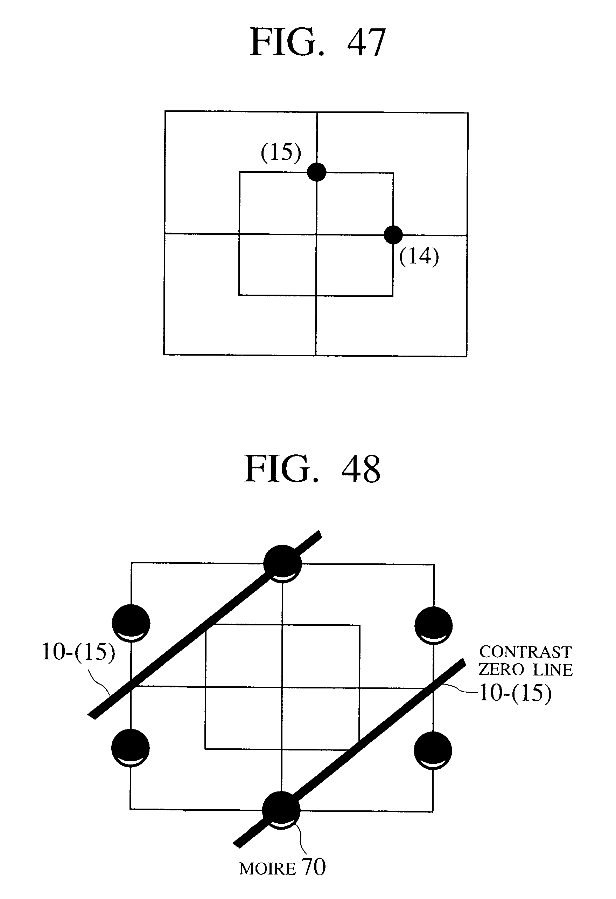

Next, during the shift shooting mode (or the shift mode), the crystal 14 is rotated by 45° in a vertical plane of the optical axis 50 by the rotary mechanism 20 in order to shoot the object. In this shift mode, the separation direction of the crystal 14 is changed, as shown in FIG.45. Accordingly, the separation direction of the crystal 14 is thereby rotated by 45°, as shown by the arrow 111 in FIG. 46, so that it is opposite to the direction 110 of the separation width of the crystal 13. Thereby, the separation pattern of pixels in the shift mode becomes the separation pattern of one direction shown in FIG.47. Accordingly, it is possible to eliminate the moires in the high frequency side on the contrast zero line 10-(15) by the crystal 15 in the moirés 70 that appear in the pattern shown in FIG.48 during the shift mode.

According to the sixth embodiment, as shown in FIG.44, it is possible to eliminate more moirés 60 in the normal mode when compared with the case of the second embodiment shown in FIG.12, because the sixth embodiment has the configuration in which the fixed crystals 13 and 15 forming the optical low pass filter are formed, and the crystal 14 is so placed between these crystals 13 and 15 that it is rotatable in the vertical plane that is vertical to the optical axis 50, and the crystal 14 is rotated by 45° in the shift mode. Furthermore, it is possible to prevent the decreasing of the resolution during the shift mode, because the contrast zero line 10-(15) to eliminate the moirés 70 during the shift mode shown in FIG.48 is not passed through the center section of the circular zone.

By the way, an optimum change amount of the rotation of the optical low pass filter in the switch from the normal mode to the shift mode is determined based on the following conditions (1) and (2):
(1) It can eliminate the moirés that occur on the position determined based on one or more of the characteristic of an image pickup optical system, the characteristic of a color filter, and the characteristic of a signal processing circuit system including a CCD; and
(2) Any contrast zero line is not passed through the center section of the circular zone during the shift mode.

In the preferred embodiments of the present invention, this optimum amount of the rotation angle is 45°.

In addition, the image pickup device of the present invention is capable of adjusting the resolution and the low pass effect by slightly changing the separation width of the crystal.

Furthermore, it is also possible to use a part in the crystals as a parallel plate to be used for pixel shifting

Moreover, it is also possible to obtain the same effect when the series of the crystals is switched in position.

As set forth in detail, the image pickup device of the present invention can prevent the occurrence of moirés during the normal shooting mode without increasing the size thereof, the manufacture cost, and without any decreasing of the reliability of the device, and it can prevent the occurrence of moirés in the high frequency side during the image shift shooting without any decreasing of the resolution.

While the above provides a full and complete disclosure of the preferred embodiments of the present invention, various modifications, alternate constructions and equivalents may be employed without departing from the scope of the invention. Therefore the above description and illustration should not be construed as limiting the scope of the invention, which is defined by the appended claims.

## Claims

1. An image pickup device having a solid state image sensor for converting an optical image to electric signals that operates under an image shift mode and a normal mode, said image shift mode is a high resolution mode in which pixels in said solid state image sensor are interpolated in order to increase a resolution, and said normal operation mode is lower in resolution than said image shift mode, said image pickup device comprising:
one or a pair of optical low pass filter that being rotatably placed in a vertical plane that being vertical to an optical axis; and
a rotary mechanism for rotating said optical low pass filter in said vertical plane that is vertical to said optical axis,
wherein. said rotary mechanism rotates said optical low pass filter in order to change an angle of said optical low pass filter in said normal mode and said image shift mode.

2. An image pickup device having a solid state image sensor for converting an optical image to electric signals that operates under an image shift mode and a normal mode, said image shift mode is a high resolution mode in which pixels in said solid state image sensor are interpolated in order to increase a resolution, and said normal operation mode is lower in resolution than said image shift mode, said image pickup device comprising:
a first optical low pass filter that being fixed in a vertical plane that being vertical to an optical axis;
a second optical low pass filter that being rotatably placed in said vertical plane that being vertical to said optical axis; and
a rotary mechanism for rotating said second optical low pass filter in said vertical plane that is vertical to said optical axis,
wherein said rotary mechanism rotates said second optical low pass filter in order to change an angle of said second optical low pass filter in said normal mode and said image shift mode.

3. An image pickup device according to claim 2, wherein during said normal mode, a separation direction of a light from said first optical low pass filter is the same as that from said second optical low pass filter, and
during said image shift mode, said separation direction of said light from said first optical low pass filter is a desired angle to said separation direction of a light from said second optical low pass filter in order to set these separation directions of said first and second optical low pass filters in two directions.

4. An image pickup device having a solid state image sensor for converting an optical image to electric signals that operates under an image shift mode and a normal mode, said image shift mode is a high resolution mode in which pixels in said solid state image sensor are interpolated in order to increase a resolution, and said normal operation mode is lower in resolution than said image shift mode, said image pickup device comprising:
first and second optical low pass filters that being fixed in a vertical plane that being vertical to an optical axis;
a third optical low pass filter that being rotatably placed in said vertical plane that being vertical to said optical axis; and
a rotary mechanism for rotating said third optical low pass filter in said vertical plane that is vertical to said optical axis,
wherein said rotary mechanism rotates said third optical low pass filter in order to change an angle of said third optical low pass filter in said normal mode and said image shift mode.

5. An image pickup device according to claim 1, wherein
when said normal mode is switched to said image shift mode, a change mount of a rotation angle or a separation width of a light form said optical low pass filter rotated by said rotary mechanism is optimally determined based on at lease one of or a combination of a characteristic of an image pickup optical mechanism, a characteristic of a color filter, a characteristic of a signal processing circuit system including a CCD.

6. An image pickup device according to claim 2, wherein
when said normal mode is switched to said image shift mode, a change mount of a rotation angle or a separation width of a light form said second optical low pass filter rotated by said rotary mechanism is optimally determined based on at lease one of or a combination of a characteristic of an image pickup optical mechanism, a characteristic of a color filter, a characteristic of a signal processing circuit system including a CCD.

7. An image pickup device according to claim 3, wherein
when said normal mode is switched to said image shift mode, a change mount of a rotation angle or a separation width of a light form said second optical low pass filter rotated by said rotary mechanism is optimally determined based on at lease one of or a combination of a characteristic of an image pickup optical mechanism, a characteristic of a color filter, a characteristic of a signal processing circuit system including a CCD.

8. An image pickup device according to claim 4, wherein
when said normal mode is switched to said image shift mode, a change mount of a rotation angle or a separation width of a light form said third optical low pass filter rotated by said rotary mechanism is optimally determined based on at lease one of or a combination of a characteristic of an image pickup optical mechanism, a characteristic of a color filter, a characteristic of a signal processing circuit system including a CCD.
